Europäisches Patentamt

European Patent Office

Office européen des brevets

(11) Publication number: **0 376 200 B1**

# EUROPEAN PATENT SPECIFICATION

(45) Date of publication of patent specification: **09.02.94**    (51) Int. Cl.5: **C08J 3/05**, //C08L1:28

(21) Application number: **89123797.6**

(22) Date of filing: **22.12.89**

(54) **Aqueous suspension of carboxymethylcellulose.**

(30) Priority: **28.12.88 US 290973**

(43) Date of publication of application:
**04.07.90 Bulletin 90/27**

(45) Publication of the grant of the patent:
**09.02.94 Bulletin 94/06**

(84) Designated Contracting States:
**AT BE CH DE ES FR GB IT LI NL SE**

(56) References cited:
**EP-A- 0 003 582**
**EP-A- 0 017 799**
**GB-A- 2 153 411**
**US-A- 2 768 143**
**US-A- 4 069 062**

(73) Proprietor: **AQUALON COMPANY**
**2711 Centerville Road**
**Little Falls Centre One**
**Wilmington Delaware 19850-5417(US)**

(72) Inventor: **Burdick, Charles Lee**
**307 Walker Road**
**Landenberg Pennsylvania 19350(US)**

(74) Representative: **Lederer, Franz, Dr. et al**
**Lederer, Keller & Riederer**
**Patentanwälte**
**Lucile-Grahn-Strasse 22**
**D-81675 München (DE)**

**Description**

This invention relates to a process for making stable aqueous suspensions of water-soluble carboxymethylcellulose polymers, the aqueous suspensions made by the process, and their use to make aqueous solutions of dissolved water-soluble carboxymethylcellulose.

Water-soluble salts of carboxymethylcellulose polymers, (which are most commonly sodium salts and will be meant whenever carboxymethylcellulose is referred to), are anionic polymers useful in many industrial processes and consumer products.

Carboxymethylcellulose has traditionally been handled in its dry, particulate form. Problems associated with dry carboxymethylcellulose include undesirable dust generation, poor dispersibility when added to aqueous systems, and undesirably long dissolution times.

The dust associated with dry, particulate carboxymethylcellulose presents the same conventional handling problems as are encountered with similar particulate materials. One major concern is the possibility of dust explosions.

Water-soluble carboxymethylcellulose is hygroscopic and absorbs water from the air, which can cause particle agglomeration. Such agglomerated particles are very difficult, if not impossible, to disperse in an aqueous system.

When added to aqueous sytems, carboxymethylcellulose tends to agglomerate or form clumps. Agglomeration can be reduced in many cases by adding the polymer to the aqueous system slowly with agitation. Such slow dissolution substantially reduces the speed of manufacturing operations.

U.S. Patent 4,283,229 discloses that a stable suspension can be prepared by adding a nonionic, water-soluble cellulose ether derivative to a solution of 4 to 12% of an electrolyte if alumina is added to the suspension. Suitable electrolytes are described to include metal or ammonium salts of mineral acids or organic acids, especially salts that contain an alkali metal ion, an alkaline earth metal ion, an earth metal ion, or a zinc, copper, iron or manganese ion as the cation, and a sulfate, carbonate, silicate, sulfite, halide, phosphate, nitrate, nitrite, acetate, formate, tartrate, or citrate ion, including their hydrogen salts, as the anion. Comparative Examples V1 and V2 show dispersion of 25% by weight methylhydroxyethylcellulose using 28 and 20% by weight potassium carbonate, respectively. However, U.S. Patent 4,283,229 is not concerned with carboxymethylcellulose and the method does not produce suspensions containing high concentrations of carboxymethylcellulose that avoid the formation of gels.

"Suspension", "dispersion", "solution" and other terms are often confused. Thus, it should be understood that herein "suspension" and "dispersion" can be used interchangeably to mean a system in which solid particles such as water-soluble carboxymethylcellulose salt particles are dispersed in water). By "solution" is meant a homogenous mixture of water and a solute such as potassium carbonate or a water-soluble carboxymethylcellulose salt.

There is a need for a fast and effective method for making suspensions containing high concentrations of carboxymethylcellulose that flows smoothly, is readily pumpable, and can be used to to make aqueous solutions of dissolved water-soluble carboxymethylcellulose, without formation of agglomerates.

According to the invention, a process for preparing an aqueous suspension of a water-soluble carboxymethylcellulose salt, is characterized in that it comprises dissolving in water at least 33 %, by weight of potassium carbonate and then dispersing therein with agitation at least 8 %, based on the weight of the total resultant aqueous suspension, of the carboxymethylcellulose salt.

Preferably 33 to 60 % by weight of potassium carbonate is dissolved in the water, and most preferably 40 % to 50 %. The choice of the concentration of the potassium salt depends on the type of carboxymethylcellulose and the quantity to be added. To suspend larger amounts of carboxymethylcellulose it is necessary to use higher potassium carbonate concentrations.

When other additives are used, these should be added to the water before the potassium salt. For instance one or more suspension stabilizers are preferably added to the water, such as hydrophilic fumed silica, clays such as attapulgite clay, and water-soluble polymers possessing cationic groups or having very low molecular weight such that they are soluble in the potassium carbonate solution, in amounts up to about 2%, and preferably in an amount of 0.5% to 1%, by weight of the total suspension.

Other additives that can be used include pigments, dispersants, surfactants, glycols and thickening agents.

Also according to the invention, an aqueous suspension comprising at least 8 % by weight of water-soluble carboxymethylcellulose, is characterized in that the an suspension also comprises at least 33 %, by weight of potassium carbonate, and the suspension is used to prepare an aqeuous solution of dissolved water-soluble carboxymethylcellulose by adding the aqueous suspension to water or an aqueous solution.

Anionic carboxymethylcellulose salts dispersed according to this invention are water soluble, giving a dynamic viscosity in the order of 1.0 Pa•s (1,000 centipoise) or more in a 5 weight percent aqueous solution. Above 5-10 weight percent, their aqueous solutions cannot normally by pumped or used to make aqueous solutions of dissolved water-soluble carboxymethylcellulose because of viscosities that are too high, even to the level that they form a gel.

The viscosity levels of the suspensions of this invention are essentially independent of the molecular weight (or solution viscosity) of the carboxymethylcellulose in suspension, and are proportional to the quantity of carboxymethylcellulose present, and are inversely proportional to the potassium carbonate concentration.

While all anionic water-soluble carboxymethylcellulose salts can be dispersed with this invention, the preferred polymer for use in this invention is the conventional sodium carboxymethylcellulose having a carboxymethyl degree of substitution (number of carboxymethyl group per anhydroglucose unit) of about 0.4 to about 1.2.

Preferably, the concentration of water-soluble carboxymethylcellulose according to this invention will be in the range of 8 to 35 % and most preferably in the range of 20 to 30 %.

By "stable" is meant that the dispersed phase (water-soluble carboxymethylcellulose) and aqueous phase do not separate for some minimum time after preparation, or if separation does occur the carboxymethylcellulose may be readily redispersed with a minor amount of agitation. Stability is a function of the type of carboxymethylcellulose used, as well as the concentration of carboxymethylcellulose, salt. The suspensions of this invention are stable as made. They should be stable for at least three hours after preparation, preferably stable for at least one day after preparation, and most preferably stable for at least one month after preparation. The stability of the suspensions of this invention can be further improved by mixing the dispersion in a vacuum, so as to remove entrained air. The prolonged stability of the suspensions of this invention permits their preparation at one location and transportation to another location where they are to be used.

The suspensions may be poured into water or an aqueous solution to prepare an aqueous solution of dissolved water-soluble carboxymethylcellulose. Agitation enhances dissolution. The suspension may also be sprinkled, sprayed, where desired for a specific end use.

The water-soluble carboxymethylcellulose suspensions of this invention may be used in this way in virtually all applications where dry water-soluble carboxymethylcellulose are conventionally used (the only limitation being that the potassium carbonates may not be desirable in a limited number of applications). Applications in which the dispersions of this invention may be used include, water clarification, mineral processing, food and pharmaceutical thickening, cosmetics thickening, agricultural products thickening, oil field applications, building products such as joint cements, ceramics, latex paints, paper coatings, emulsion polymerization, and suspension polymerization.

Advantages of using the high concentration water-soluble carboxymethylcellulose suspensions of this invention include the ability to control thickening action of the carboxymethylcellulose (thickening time is reduced substantially), ease of handling and dosage control.

Any granularity of aqueous systems prepared using the aqueous suspensions of this invention may be reduced by using carboxymethylcellulose having relatively uniform carboxymethyl substitution, e.g., CMC-7M8SXF (Aqualon Company, Wilmington, DE). ("Granularity" refers to the presence of a number of readily visible undissolved "gel specs" when the suspension is added to water. These gel specs can remain insoluble indefinitely in the dilution medium and usually cause poor performance).

This invention is illustrated by the following examples, in which all parts or percentages are by weight. The water used was distilled water.

Example 1

An aqueous potassium carbonate solution was prepared. Then, carboxymethylcellulose was added incrementally to 100 g of the solution while recording the systems' viscosity as a function of carboxymethylcellulose addition level with a Stormer Viscometer (after each incremental addition the sample was stirred for 15 minutes prior to measuring its viscosity). Carboxymethylcellulose was added to each sample until the system's viscosity exceeded the maximum value that could be measured with the Stormer Viscometer (corresponding to a viscosity of greater than 140 Krebs Units (KU) at which point these systems were not readily pourable). These results are shown in Table 1.

## TABLE 1
### AQUEOUS SUSPENSIONS OF CMC

| Sample | K$_2$CO$_3$ (%)[1] | CMC[2] Type | CMC[3] Level | CMC[4] (%) | System[5] Viscosity | Observations |
|--------|------------|----------|-----------|---------|------------------|--------------|
| 1A | 33.3 % solution | CMC-7LF | 3.0 g | 2.9% | below scale | stable suspension >15 mins. |
| 1B | " | " | 9.0 g | 8.3% | " " | " |
| 1C | " | " | 12.5 g | 11.1% | 120 KU | " |
| 1D | " | " | 14.0 g | 12.3% | >140 KU | " |
| 2A | " | CMC-7MXF | 9.0 g | 8.3% | 68 KU | " |
| 2B | " | " | 12.0 g | 10.7% | 125 KU | " |
| 2C | " | " | 13.5 g | 11.9% | >140 KU | " |
| 3A | " | CMC-7HXF | 7.5 g | 7.0% | 88 KU | " |
| 3B | " | " | 9.0 g | 8.3% | 135 KU | " |
| 3C | " | " | 9.5 g | 8.7% | >140 KU | " |
| 4A | " | CMC-7M8SXF | 10.0 g | 9.1% | 106 KU | " |
| 4B | " | " | 11.5 g | 10.3% | 134 KU | " |
| 4C | " | " | 13.0 g | 11.5% | >140 KU | " |

1. Percentage of potassium carbonated dissolved in water, by total weight of the potassium carbonate and water.
2. The carboxymethylcellulose (CMC) used is available from the Aqualon Company, Wilmington, DE. The types are indicated by thier grade designations. Those with the designation 7LF have a relatively low viscosity, with the designation 7M have a relatively medium viscosity and with the designation 7H have a relatively high viscosity.
3. Cumulative CMC added to 100 grams potassium carbonate solution.
4. Percentage of CMC, based on the total weight of the suspension.
5. Measured on a Stormer Paint Viscometer, Krebs Units (KU).

TABLE 1 (cont.)
AQUEOUS SUSPENSIONS OF CMC

| Sample | $K_2CO_3$ (%)[1] | CMC[2] Type | CMC[3] Level | CMC[4] (%) | System[5] Viscosity | Observations |
|--------|------|-----|------|-----|-----------|--------------|
| 5A | 40 % | CMC-7LF | 13.0 g | 11.5% | below scale | stable suspension >15 mins. |
| 5B | " | " | 18.0 g | 15.3% | 80 KU | " |
| 5C | " | " | 21.0 g | 17.4% | 129 KU | " |
| 5D | " | " | 22.5 g | 18.4% | >140 KU | " |
| 6A | " | CMC-7MXF | 18.0 g | 15.3% | 72 KU | " |
| 6B | " | " | 19.5 g | 16.3% | 95 KU | " |
| 6C | " | " | 21.0 g | 17.4% | 116 KU | " |
| 6D | " | " | 23.0 g | 18.7% | >140 KU | " |
| 7A | " | CMC-7HXF | 18.0 g | 15.3% | 103 KU | " |
| 7B | " | " | 19.0 g | 16.0% | 138 KU | " |
| 7C | " | " | 19.5 g | 16.3% | >140 KU | " |
| 8A | " | CMC-7M8SXF | 18.0 g | 15.3% | 68 KU | " |
| 8B | " | " | 19.5 g | 16.3% | 89 KU | " |
| 8C | " | " | 21.0 g | 17.4% | 123 KU | " |
| 8D | " | " | 23.0 g | 18.7% | >140 KU | " |

EP 0 376 200 B1

### TABLE 1 (cont.)
### AQUEOUS SUSPENSIONS OF CMC

| Sample | $K_2CO_3$ (%)[1] | CMC[2] Type | CMC[3] Level | CMC[4] (%) | System[5] Viscosity | Observations |
|---|---|---|---|---|---|---|
| 9A | 50 % | CMC-7LF | 20.0 g | 16.7% | below scale | stable suspension  >15 mins. |
| 9B | " | " | 30.0 g | 23.1% | 82 KU | " |
| 9C | " | " | 35.0 g | 25.9% | 122 KU | " |
| 9D | " | " | 37.0 g | 27.0% | >140 KU | " |
| 10A | " | CMC-7MXF | 30.0 g | 23.1% | 78 KU | " |
| 10B | " | " | 35.0 g | 25.9% | 122 KU | " |
| 10C | " | " | 37.0 g | 27.0% | >140 KU | " |
| 11A | " | CMC-7HXF | 30.0 g | 23.1% | 74 KU | " |
| 11B | " | " | 35.0 g | 25.9% | 116 KU | " |
| 11C | " | " | 37.0 g | 27.0% | >140 KU | " |
| 12A | " | CMC-7M8SXF | 30.0 g | 23.1% | 78 KU | " |
| 12B | " | " | 35.0 g | 25.9% | 134 KU | " |
| 12C | " | " | 37.0 g | 27.0% | >140 KU | " |

TABLE 1 (cont.)
AQUEOUS SUSPENSIONS OF CMC

| Sample | K₂CO₃ (%)¹ | CMC² Type | CMC³ Level | CMC⁴ (%) | System⁵ Viscosity | Observations — stable suspension >15 mins. |
|---|---|---|---|---|---|---|
| 13A | 54 | CMC-7LF | 25.0 g | 20.0 | 55 KU | • |
| 13B | • | • | 30.0 g | 23.1 | 70 KU | • |
| 13C | • | • | 37.0 g | 27.0 | 108 KU | • |
| 13D | • | • | 42.0 g | 29.6 | >140 KU | • |
| 14A | • | CMC-7MXF | 30.0 g | 23.1 | 65 KU | • |
| 14B | • | • | 37.0 g | 27.0 | 105 KU | • |
| 14C | • | • | 42.0 g | 29.6 | >140 KU | • |
| 15A | • | CMC-7HXF | 30.0 g | 23.1 | 68 KU | • |
| 15B | • | • | 37.0 g | 27.0 | 100 KU | • |
| 15C | • | • | 42.0 g | 29.6 | 140 KU | • |
| 15D | • | • | 42.5 g | 29.6 | >140 KU | • |
| 16A | • | CMC-7H4SXF | 30.0 g | 23.1 | 68 KU | • |
| 16B | • | • | 37.0 g | 27.0 | 106 KU | • |
| 16C | • | • | 42.0 g | 29.6 | >140 KU | • |

The above evidence shows that stable carboxymethylcellulose suspensions can be prepared using potassium carbonate per this invention. When various CMC types were added to these salt solutions the CMC did not dissolve, but instead formed fluid pourable suspensions that did not exhibit any significant perceptible particle settling after 15 minutes.

The evidence shows that suspensions comprising relatively high concentrations of carboxymethylcellulose that do not have excessive viscosity can be prepared. Suspension viscosities were relatively independent of the molecular weight of carboxymethylcellulose suspended. Instead, viscosities were proportional to the quantities of carboxymethylcellulose added. In addition, suspension viscosities were inversely proportional to the potassium carbonate concentration indicating that the maximum quantity of carboxymethylcellulose that can be suspended in a pourable fluid is dependent upon the potassium carbonate concentration. Thus, in order to prepare fluid suspensions having higher carboxymethylcellulose concentrations larger percentages of potassium carbonate were necessary.

Example 2

For comparative purposes a 28% aqueous solution of potassium carbonate, as defined in U.S. patent 4,283,229, example V1 was tested as a possible suspending medium for carboxymethylcellulose. The procedures of Example 1 were repeated using 28% potassium carbonate solutions. The results are shown in Table 2.

TABLE 2
ADDITION OF CMC TO 28% POTASSIUM CARBONATE SOLUTION

| Sample | $K_2CO_3$, (%)[1] | CMC[2] Type | CMC[3] Level | System[4] Viscosity | Observations |
|---|---|---|---|---|---|
| 17A | 28 | CMC-7LF | 3 g | below scale | CMC dissolves |
| 17B | " | " | 6 g | 85 KU | " |
| 17C | " | " | 9 g | >140 KU | " |
| 18A | " | CMC-7MXF | 3 g | below scale | " |
| 18B | " | " | 6 g | 114 KU | " |
| 18C | " | " | 9 g | >140 KU | " |
| 19A | " | CMC-7HXF | 3 g | 55 KU | " |
| 19B | " | " | 6 g | >140 KU | " |
| 19A | " | CMC-7M8SXF | 3 g | 58 KU | " |
| 19B | " | " | 6 g | >140 KU | " |

1. Percentage of potassium carbonate dissolved in water, by total weight of the potassium carbonate and water.
2. The carboxymethylcellulose (CMC) used is available from the Aqualon Company, Wilmington, DE. The types are indicated by thier grade designations. Those with the designation 7LF have a low viscosity, with the designation 7M have a medium viscosity and with the designation 7H have a high viscosity.
3. Cumulative CMC added to 100 grams potassium carbonate solution.
4. Measured on a Stormer Paint Viscometer, Krebs Units (KU).

The potassium carbonate solutions prepared according to example V1 of U.S. patent 4,283,229, were ineffective for preparing a suspension with any of the carboxymethylcellulose samples tested. In all instances the carboxymethylcellulose was observed to dissolve and form very viscous carboxymethylcellulose solutions, rather than suspensions. The fact that the carboxymethylcellulose was dissolved was quantitatively evidenced by the sharply higher system viscosities encountered with higher molecular weight carboxymethylcellulose types, such as CMC-7MXF and CMC-7HXF, in the examples of Table 2.

## Example 3

Solutions were prepared by adding 5 g of suspensions prepared according to the process of Example 1 to 95 g dilution water. The suspensions and polymers used, and results are shown in Table 3.

TABLE 3
SOLUTIONS PREPARED FROM CMC SUSPENSIONS

| Sample | CMC Type | Suspension of Sample No. | Solution Viscosity[1] (mPa·s) | Granularity |
|---|---|---|---|---|
| 20 | CMC-7LF | 9D | 34[2] | observed |
| 21 | CMC-7MXF | 10C | 350[3] | observed |
| 22 | CMC-7HXF | 11C | 1100[4] | observed |
| 23 | CMC-7M8SXF | 12C | 415[3] | not apparent |

1. Brookfield LVT viscosity (30 rpm.)
2. #1 spindle.
3. #2 spindle.
4. #3 spindle.

It was observed that the suspensions of this invention dispersed and then thickened the water rapidly to form viscous solutions.

Best results were obtained with sample 4, which was a carboxymethylcellulose having relatively uniform carboxymethyl substitution.

## Claims

1. A process for preparing an aqueous suspension of a water-soluble carboxymethylcellulose salt, characterized in that it comprises dissolving in water at least 33 % by weight of potassium carbonate and then dispersing therein with agitation at least 8 %, based on the weight of the total resultant aqueous suspension, of the carboxymethylcellulose salt.

**2.** A process for preparing an aqueous suspension of a carboxymethylcellulose as claimed in claim 1, further characterized in that 33 % to 60 %, by weight of the total salt and water, of the potassium carbonate is dissolved in the water.

**3.** A process for preparing an aqueous suspension of a carboxymethylcellulose as claimed in claim 2, further characterized in that 40 % to 50 %, by weight of the potassium carbonate is dissolved in the water.

**4.** A process for preparing an aqueous suspension of a carboxymethylcellulose as claimed in claim 1, 2, or 3, further characterized in that 8 % to 35 % by weight of the carboxymethylcellulose salt is dispersed in the water.

**5.** A process for preparing an aqueous suspension of a carboxymethylcellulose as claimed in claim 4, further characterized in that 20% to 30% by weight of the carboxymethylcellulose salt is dispersed in the water.

**6.** A process for preparing an aqueous suspension of a carboxymethylcellulose as claimed in any of the preceding claims, further characterized in that the carboxymethylcellulose salt is sodium carboxymethylcellulose.

**7.** A process for preparing an aqueous suspension of a carboxymethylcellulose as claimed in any of the preceding claims, further characterized in that up to 2 %, based upon the weight of the total aqueous suspension, or a suspension stabilizer is added to the water.

**8.** A process for preparing an aqueous suspension of a carboxymethylcellulose as claimed in claim 7, further characterized in that the suspension stabilizer is fumed silica, a clay, or a water-soluble polymer having cationic groups or having very low molecular weight that is soluble in the potassium carbonate solution.

**9.** A process for preparing an aqueous suspension of a carboxymethylcellulose as claimed in any of the preceding claims wherein entrained air is removed by vacuum.

**10.** A process for preparing an aqueous suspension of a carboxymethylcellulose as claimed in any of the preceding claims wherein the carboxymethylcellulose has a dynamic viscosity on the order of 1.0 Pa•s (1,000 centipoise) or more in a 5 weight % aqueous solution.

**11.** An aqueous suspension comprising at least 8 % by weight of water-soluble carboxymethylcellulose, characterized in that the suspension also comprises an at least 33 %, by weight solution of potassium carbonate in water.

**12.** Use of the the aqueous suspension as claimed in claim 11,to prepare an aqueous solution of dissolved water-soluble carboxymethylcellulose salt by adding the aqueous suspension to water or an aqueous solution.

**Patentansprüche**

**1.** Verfahren zur Herstellung einer wässrigen Suspension eines wasserlöslichen Carboxymethylcellulosesalzes, dadurch gekennzeichnet, dass mindestens 33 Gew.-% Kaliumcarbonat in Wasser gelöst und dann in der erhaltenen Lösung unter Rühren mindestens 8 %, bezogen auf das Gewicht der gesamten hergestellten wässrigen Suspension, des Carboxymethylcellulosesalzes dispergiert werden.

**2.** Verfahren zur Herstellung einer wässrigen Suspension eines Carboxymethylcellulosesalzes nach Anspruch 1, dadurch gekennzeichnet, dass 33 bis 60 Gew.-%, bezogen auf die Gesamtmenge von Salz und Wasser, an Kaliumcarbonat in Wasser gelöst werden.

**3.** Verfahren zur Herstellung einer wässrigen Suspension eines Carboxymethylcellulosesalzes nach Anspruch 2, dadurch gekennzeichnet, dass 40 bis 50 Gew.-% an Kaliumcarbonat in Wasser gelöst werden.

4. Verfahren zur Herstellung einer wässrigen Suspension eines Carboxymethylcellulosesalzes nach Anspruch 1, 2 oder 3, dadurch gekennzeichnet, dass 8 bis 35 Gew.-% des Carboxymethylcellulosesalzes in Wasser dispergiert werden.

5. Verfahren zur Herstellung einer wässrigen Suspension eines Carboxymethylcellulosesalzes nach Anspruch 4, dadurch gekennzeichnet, dass 20 bis 30 Gew.-% des Carboxymethylcellulosesalzes in Wasser gelöst werden.

6. Verfahren zur Herstellung einer wässrigen Suspension eines Carboxymethylcellulosesalzes nach einem der vorangehenden Ansprüche, dadurch gekennzeichnet, dass das Carboxymethylcellulosesalz Natriumcarboxymethylcellulose ist.

7. Verfahren zur Herstellung einer wässrigen Suspension eines Carboxymethylcellulosesalzes nach einem der vorangehenden Ansprüche, dadurch gekennzeichnet, dass bis zu 2 %, bezogen auf das Gewicht der gesamten wässrigen Suspension, eines Suspensionsstabilisators zum Wasser gegeben werden.

8. Verfahren zur Herstellung einer wässrigen Suspension eines Carboxymethylcellulosesalzes nach Anspruch 7, dadurch gekennzeichnet, dass der Suspensionsstabilisator pyrogene Kieselsäure, ein Ton oder ein wasserlösliches Polymer mit kationischen Gruppen oder mit sehr niedrigem Molekulargewicht, das in der Kaliumcarbonatlösung löslich ist, ist.

9. Verfahren zur Herstellung einer wässrigen Suspension eines Carboxymethylcellulosesalzes nach einem der vorangehenden Ansprüche, dadurch gekennzeichnet, dass mitgeführte Luft unter Vakuum entfernt wird.

10. Verfahren zur Herstellung einer wässrigen Suspension eines Carboxymethylcellulosesalzes nach einem der vorangehenden Ansprüche, dadurch gekennzeichnet, dass das Carboxymethylcellulosesalz eine dynamische Viskosität in der Grössenordnung von 1,0 Pa • s (1'000 centipoise) oder mehr in einer 5 %igen wässrigen Lösung besitzt.

11. Eine wässrige Suspension, enthaltend mindestens 8 Gew.-% eines wasserlöslichen Carboxymethylcellulosesalzes, dadurch gekennzeichnet, dass die Suspension auch mindestens 33 Gew.-% an in Wasser gelöstem Kaliumcarbonat enthält.

12. Verwendung der wässrigen Suspension nach Anspruch 11, zur Herstellung einer wässrigen Lösung eines gelösten wasserlöslichen Carboxymethylcellulosesalzes durch Zugabe der wässrigen Suspension zu Wasser oder zu einer wässrigen Lösung.

**Revendications**

1. Procédé de préparation d'une suspension aqueuse d'un sel hydrosoluble de carboxyméthylcellulose, caractérisé en ce qu'il consiste à dissoudre dans de l'eau au moins 33% en poids de carbonate de potassium puis à y disperser, avec agitation, au moins 8%, par rapport au poids de la suspension aqueuse résultante totale, du sel de carboxyméthylcellulose.

2. Procédé de préparation d'une suspension aqueuse d'une carboxyméthylcellulose selon la revendication 1, caractérisé en outre en ce que 33% à 60%, en poids par rapport au total du sel et de l'eau, du carbonate de potassium sont dissous dans l'eau.

3. Procédé de préparation d'une suspension aqueuse de carboxyméthylcellulose selon la revendication 2, caractérisé en outre en ce que 40% à 50% en poids du carbonate de potassium sont dissous dans l'eau.

4. Procédé de préparation d'une suspension aqueuse d'une carboxyméthylcellulose selon l'une des revendications 1, 2 ou 3, caractérisé en outre en ce que 8% à 35% en poids du sel de carboxyméthylcellulose sont dispersés dans l'eau.

**5.** Procédé de préparation d'une suspension aqueuse d'une carboxyméthylcellulose selon la revendication 4, caractérisé en outre en ce que 20% à 30% en poids du sel de carboxyméthylcellulose sont dispersés dans l'eau.

**6.** Procédé de préparation d'une suspension aqueuse d'une carboxyméthylcellulose selon l'une quelconque des revendications précédentes, caractérisé en outre en ce que le sel de carboxyméthylcellulose est la carboxyméthylcellulose sodique.

**7.** Procédé de préparation d'une suspension aqueuse d'une carboxyméthylcellulose selon l'une quelconque des revendications précédentes, caractérisé en outre en ce que jusqu'à 2%, par rapport au poids de la suspension aqueuse totale, d'un stabilisant de suspension sont ajoutés à l'eau.

**8.** Procédé de préparation d'une suspension aqueuse d'une carboxyméthylcellulose selon la revendication 7, caractérisé en outre en ce que le stabilisant de suspension est la silice fumée, une argile, ou un polymère hydrosoluble ayant des groupements cationiques ou ayant un très faible poids moléculaire qui est soluble dans la solution de carbonate de potassium.

**9.** Procédé de préparation d'une suspension aqueuse d'une carboxyméthylcellulose selon l'une quelconque des revendications précédentes, caractérisé en ce que l'air entraîné est enlevé sous vide.

**10.** Procédé de préparation d'une suspension aqueuse d'une carboxyméthylcellulose selon l'une quelconque des revendications précédentes, dans lequel la carboxyméthylcellulose a une viscosié dynamique de l'ordre de 1,0 Pa.s (1000 centipoise) ou plus en solution aqueuse à 5% en poids.

**11.** Suspension aqueuse comprenant au moins 8% en poids de carboxyméthylcellulose hydrosoluble, caractérisée en ce que la suspension comprend également une solution d'au moins 33% en poids de carbonate de potassium dans de l'eau.

**12.** Utilisation de la suspension aqueuse selon la revendication 11, pour préparer une solution aqueuse de sel de carboxyméthylcellulose hydrosoluble dissous, par addition de la suspension aqueuse à de l'eau ou une solution aqueuse.